# EUROPÄISCHE PATENTSCHRIFT

(11) **EP 3 077 075 B1**
(45) Veröffentlichungstag und Bekanntmachung des Hinweises auf die Patenterteilung: **11.10.2017**
(21) Anmeldenummer: 14742452.7
(22) Anmeldetag: 23.06.2014
(51) Int. Cl.: B01D 35/143, B01D 29/60, B01D 46/24

(54) **VORRICHTUNG ZUR MESSUNG DER ÜBERFÜLLUNG VON FILTERELEMENTEN MIT FILTERKUCHEN IN DRUCKFILTERN**
DEVICE FOR MEASURING THE OVERFILL OF FILTER ELEMENTS COMPRISING FILTER CAKES IN PRESSURIZED FILTERS
DISPOSITIF DE MESURE DU SUR-REMPLISSAGE D'ÉLÉMENTS FILTRANTS PAR LE GÂTEAU DE FILTRATION DANS DES FILTRES-PRESSES

(30) Priorität: 04.12.2013 CH 20042013
(43) Veröffentlichungstag der Anmeldung: 12.10.2016
(73) Patentinhaber: DrM, Dr. Müller AG, 8708 Männedorf (CH)
(72) Erfinder: MÜLLER, Patrick, CH-8708 Männedorf (CH)
(74) Vertreter: Herrmann, Peter Johannes
(86) Internationale Anmeldenummer: PCT/CH2014/000087
(87) Internationale Veröffentlichungsnummer: WO 2015/081450

(56) Entgegenhaltungen:
- WO-A1-03/035216
- DE-A1- 2 358 365
- DE-A1- 2 619 864
- DE-A1- 3 233 750
- DE-B- 1 019 999

## Beschreibung

Die vorliegende Erfindung betrifft eine Vorrichtung zur Vermeidung der Überfüllung von Filterelementen mit Filterkuchen, bestehend aus einem Filtergehäuse und Filtersammelrohren, wobei Sensoren zur Kraftmessung innerhalb des Filtergehäuses vorgesehen sind.

Druckfiltersysteme mit horizontal oder vertikal angeordneten Filterelementen in einem Druckbehälter können bei hohen Feststoffkonzentrationen oder bei zu langen Filtrationszyklen mit mehr als der zugelassenen Filterkapazität an Feststoffen beaufschlagt werden. Dieser Feststoff lagert sich in den Hohlräumen zwischen den Filterelementen an und füllt diese komplett aus. Sind diese nun gefüllt führt dies zu Prozesskomplikationen, wie zum Beispiel erschwertes Austragen des Filterkuchens oder zu Verformungen der Filterelemente bis zur irreparablen Zerstörung der Innenteile. Die daraus entstehenden Reparaturkosten können beträchtlich sein.

Um diesem Problem zu begegnen wurden in der Vergangenheit verschiedene Instrumente eingesetzt die die Kuchendicke messen. Aufgrund des oft unregelmässigen Kuchenaufbaus und der Schwierigkeit des Einstellens solcher Messinstrumente in einem geschlossenen Druckbehälter waren diese meistens sehr unzuverlässig.

Aus der DE 26 19 864 A1 ist eine Vorrichtung zur Überwachung der Schichtdicke des sich auf einem Filterelement innerhalb eines Filterbehälters bildenden Filterkuchens, insbesondere in einem Zentrifugalreinigungsfilter, bekannt. Hierbei wird eine Messplatte bei Berührung mit einem wachsensen Filterkuchen aufgrund der dadurch entstehenden Druckdifferenz nach unten gedrückt.

Das Dokument DE 32 33 750 A1 beschreibt zwar die Anwendung einer Kraftmessvorrichtung an Filterschläuchen, ist aber auf die Messung der bleibenden Dehnung von Schläuchen beschränkt.

Aus der DE 20 34 308 A1 ist ein Verfahren bekannt, bei dem eine separate Messfilterapparatur, als Referenzfilter, parallel zum Hauptfilter eingesetzt wird, die es erlaubt, mittels eines Sichtglases den Kuchenaufbau während des Betriebs zu beobachten und somit die Kuchendicke zu ermitteln. Dabei geht man davon aus, dass der Kuchenaufbau im Referenzfilter gleich schnell vonstatten geht wie im Hauptfilter.

Die US 40 70 288 A beschreibt ein Verfahren zur Detektion der Kuchendicke mittels einer speziellen Messplatte die sich verschiebt wenn der Kuchen an die Platte heranwächst. In der Praxis hat sich dieses System als problematisch erwiesen, da beim Kuchenaustrag durch Rotation der Filterelemente die Messptatte verschoben wird was die Messung beeinträchtigt. Da sich in der Praxis die Filterkuchen unregelmässig aufbauen und die eingebaute Messplatte die Kuchenstärke nur an einem einzigen Punkt misst, hat sich diese Messverfahren als zu wenig repräsentativ erwiesen. Demzufolge hat sich dieses Verfahren nicht bewährt und wurde kaum in der Praxis umgesetzt.

Aufgabe der Erfindung ist es, eine Vorrichtung zur Sicherung von Druckfiltern und deren Filterelemente vor dem Überfüllen mit zu viel Feststoffen zur Verfügung zu stellen.

Eine weitere Aufgabe der Erfindung ist es, kleinste Verformungen der Filterelemente zu messen, um einen entsprechenden Alarm auszulösen. Es soll auf ein zusätzliches mechanisches Messsystem verzichtet werden.

Diese Aufgaben werden erfindungsgemäss dadurch gelöst, dass Sensoren am verschlossenen Ende der Filtersammelrohre über den Filterelementen zur Kraftmessung innerhalb des Filtergehäuse vorgesehen sind.
Die Anordnung hat den Vorteil, dass auch unregelmässig wachsende Filterkuchen, unabhängig vom Ort der Messung berücksichtigt werden.

Das hiermit vorgeschlagene System baut im Gegensatz zum ermittelten Stand der Technik auf einem unterschiedlichen Ansatz auf, bei dem nicht die Kuchendicke gemessen, sondern das Verschieben oder Verformen der Elemente erkannt wird. Dabei werden an individuellen Elementen oder Gruppen von Elementen Messsonden montiert die die Kräfte am Element messen.

Solange das Messsystem präzis genug ist um auch kleine Abweichungen zu detektieren und den Ueberfüllvorgang schon in den Anfängen erkennen zu können, sind die durch den Feststoff verursachten Kräfte noch zu klein um einen mechanischen Schaden an den Elementen zu verursachen. Dabei kann man davon ausgehen, dass die Elastizität des Konstruktionsmaterials der Filterelemente gross genug ist und somit ein permanenter Schaden vermieden werden kann.

Zusätzlich kann eine mechanische Deformierung weiter verzögert werden, indem man die Elemente oder Elementgruppen über eine Federung mit dem Filterapparat verbindet. Somit kann die Elastizität weiter erhöht werden.

Da sich der Feststoffaufbau im Filter örtlich oft unterschiedlich verhält reicht es meistens nicht nur an einem Filterelement oder Gruppe die Verspannung zu messen. Deshalb macht es Sinn, eine Reihe von Messsonden im Filtersystem einzusetzen. Im weiteren ist ein solches Messsystem aufgezeigt bei dem in einem mit vertikalen Filterelementen und horizontalen Registern versehenen Apparat Messsonden an den Registerenden (Elementgruppen) angebracht sind um die Verschiebung dieser zu detektieren. Es ist aber auch denkbar, dass solche Messsonden an anderen Stellen der Elementgruppen angebracht werden. Die Erfindung soll anhand einer Zeichnung näher beschrieben werden.

Es zeigen:
Fig.1 die erfindungsgemässe Vorrichtung im Querschnitt mit vergrössertem Detail.
Fig. 2 die erfindungsgemässe Vorrichtung im Querschnitt von oben mit vergrössertem Detail

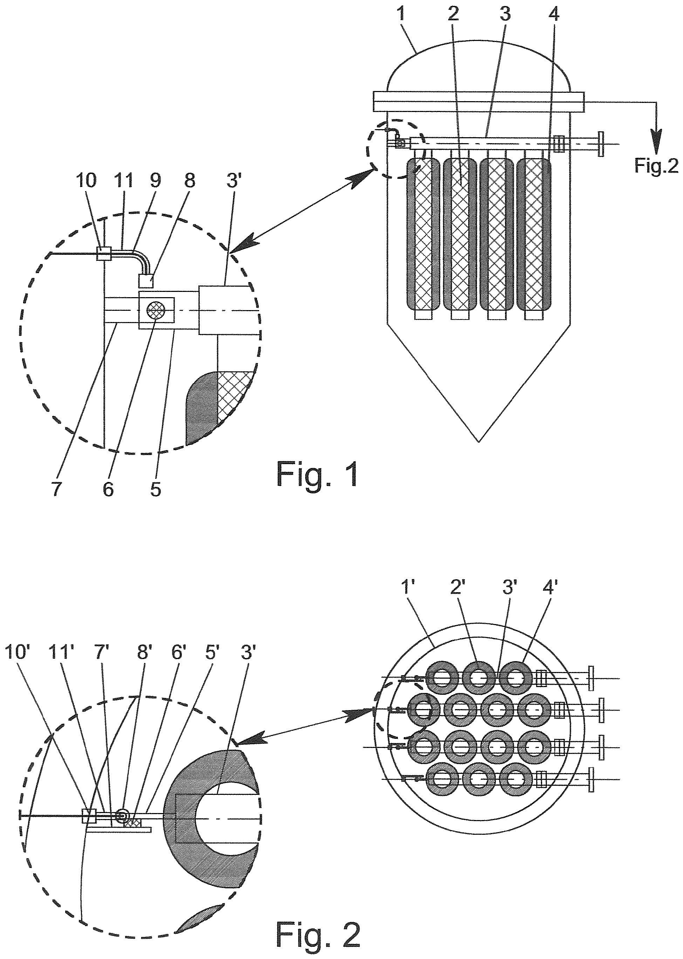

Gemäss Fig. 1 ist mit dem Bezugszeichen 1 ein Gehäuse eines Kerzenfitters, bestehend aus Filterelementen 2 bezeichnet. Ein Register aus Filterelementen 2, auf welchen ein Filterkuchen 4 gezeigt ist, und einem Filtratsammelrohr 3 mit einem offenen Ende für den Filtratablauf und einem geschlossenen Ende, welches das über eine Kupplung 5 mit einer Halterung 7 des Registers am Filtergehäuse befestigt ist. Die Kupplung 5 kann zusätzlich ein Federsystem 6 enthalten, um die Elastizität zu erhöhen. Die Sensoren 8 sind an einer Messsondenführung 11 befestigt welche mit der Durchführung 10 verbunden ist.

Die Kabel 9 der Sensoren 8,8' werden über eine oder mehrere druckbeständige Durchführungen 10 aus dem Druckbehälter 1 geführt.

In Figur 2 sind gleiche Teile mit gleichen apostrophierten Bezugszeichen beschrieben.

Das Filtergehäuse 1' mit Filterelementen 2' und Filtratsammelrohren 3' im Querschnitt von oben, mit vergrössertem Detail der hinteren Besfestigung der Filtratsammelrohre 3'. Eine Kraftmesssonde kann zwischen dem Registerendstück und der Registeraufhängung montiert werden die Kräftevariationen misst. Solche Kräfteänderungen geben Aufschluss über die durch die Feststoffe aufgebaute Kuchendicke. Auch hier kann nun bei erhöhten Kräften ein Alarm ausgelöst werden.

## Patentansprüche

1. Filtervorrichtung zur Vermeidung der Überfüllung von Filterelementen (2,2') mit Filterkuchen, bestehend aus einem Filtergehäuse (1,1') und Filtratsammelrohren (3,3'), wobei Sensoren (8,8') zur Kraftmessung innerhalb des Filtergehäuses (1,1') vorgesehen sind, **dadurch gekennzeichnet, dass** die Sensoren (8,8') am verschlossenen Ende der Filtratsammelrohre (3,3') über den Filterlementen (2,2') angeordnet sind.

2. Vorrichtung nach Anspruch 1, **dadurch gekennzeichnet, dass** zwischen den Enden der Filtratsammelrohre (3,3') und Haltern (7,7') am Filtergehäuse (1,1') eine Feder (6,6') vorgesehen ist

3. Vorrichtung nach Anspruch 2, **dadurch gekennzeichnet, dass** zwischen den Enden der Filtratsammelrohre (3,3') und Haltern (7,7') am Filtergehäuse (1,1') ein Elastomer vorgesehen ist.

## Claims

1. A filter device for preventing the overfill of filter elements (2,2') with filter cake in a filter housing (1,1'), wherein sensors (8,8') for measuring force are provided within the filter housing (1,1') **characterized in that** the sensors (8,8') are arranged over the filter elements (2,2') at the closed end of the filtrate colletion tubes (3,3').

2. The device according to claim 1, **characterized in that** a spring (6,6') is provided between the ends of the filtrate collection tubes (3,3') and the holders (7,7') on the filter housing (1,1').

3. The device according to claim 2, **characterized in that** an elastomer is provided between the ends of the filtrate collection tubes (3,3') and the holders (7,7') on the filter housing (1,1').

## Revendications

1. Un dispositif de filtration pour prevenir le remplissage excessif d'éléments filtrants (2,2") avec un gâteau dans la cuve filtrante (1,1"), dans lequel un capteurs (8,8") que mesure le forces prévu dans la cuve filtrante (1,1"), ou le capteurs (8,8") son disposes sur les element filtrantes (2,2") a l'extrémité final du registre (3,3")

2. Dispositif selon la revendication 1, **caractérisé par** un ressort (6,6") prévu entre les extrémités de registres (3,3") et le support (7,7") du registre sur la cuve filtrante (1,1")

3. Dispositif selon revendication 2, **caractérisé par** un elastomer prévu entre les extrémités de registres (3,3") et le support (7,7") du registre sur la cuve filtrante (1,1")
